# EUROPEAN PATENT APPLICATION

(11) **EP 4 841 881 A1**
(43) Date of publication of application: **18.11.2026**
(21) Application number: 24916972.3
(22) Date of filing: 28.11.2024
(51) Int. Cl.: H02M 7/12, H02J 50/12

(54) **POWER RECEPTION DEVICE**

(30) Priority: 12.01.2024 JP 2024002917
(71) Applicant: DENSO CORPORATION, Kariya-city, Aichi 448-8661 (JP)
(72) Inventor: TAKAHASHI, Masaya, Kariya- city, Aichi 448-8661 (JP); NAKAYASHIKI, Yusei, Kariya- city, Aichi 448-8661 (JP); YAMAGUCHI, Nobuhisa, Kariya- city, Aichi 448-8661 (JP)
(74) Representative: TBK
(86) International application number: PCT/JP2024/042134
(87) International publication number: WO 2025/150287

(57) **Abstract**

A power-receiving device (100) that receives AC power in a wireless manner using a magnetic field, including a resonant circuit (110), a synchronous rectification circuit (120), a load device (130), and a control circuit (150), wherein the control circuit performs a power supply mode (M1) in which DC power is output from the synchronous rectification circuit in a half cycle of the AC power, and a short-circuit mode (M2) in which a high-potential side second switch (SwLH), which is a second switch to which a voltage is applied in the reverse direction of a parallel diode (Di) among a plurality of second switches (SwL) in a plurality of leg circuits, is controlled to be in an ON state, and controls a low-potential side second switch (SwLL), which is a second switch through which a current flows to the parallel diode, among a plurality of second switches in the short-circuit mode, to be in an ON state for a first period shorter than one cycle and longer than a half cycle of the AC power.

## Description

### [Cross-Reference to Related Applications]

The present application is based on and claims the benefit of priority from earlier Japanese Patent Application No. 2024-002917 filed on January 12, 2024, the contents of which are incorporated herein by reference.

### [Technical Field]

The present disclosure relates to a power-receiving device.

### [Background Art]

In power-receiving devices used in wireless power supply systems for vehicles, there is a technology that uses a switch in a rectification circuit, as described in Patent Literature 1. The rectification circuit described in Patent Literature 1 supplies DC power to a load device by rectifying AC power received by a resonant circuit including a power-receiving coil. The rectification circuit described in Patent Literature 1 uses a switch to short-circuit an output section of the resonant circuit, which is also an input section of the rectification circuit. The received power is not supplied to the load device. In other words, the technology described in Patent Literature 1 allows the power supplied to the load device to be controlled by the switch in the rectification circuit.

The rectification circuit described in Patent Literature 1 is composed of a circuit in which the switch is connected in series to an anode side of a diode. In addition, the output section of the resonant circuit is connected between the diode and the switch in the rectification circuit. The rectification circuit described in Patent Literature 1 short-circuits the output section of the resonant circuit by turning on the switch while the diode is energized.

### [Citation List]

### [Patent Literature]

[PTL 1] JP 6240503 B1

### [Summary of the Invention]

However, the above technologies have the following problems: While the diode is energized, the switch that is in an OFF state will have voltage applied to it. When the switch is turned on, the switch moves from a state where voltage is applied to an ON state. In other words, the switch incurs switching losses due to hard switching.

Further, when current flows through the switch, the forward current of the diode drops sharply. This makes it easier for the recovery current, which causes losses during switching, to become larger.

In other words, when controlling the power supplied to the load device by switching the rectification circuit, a major problem was that significant losses occurred during switching.

The present disclosure can be realized in the following aspects.

According to a first aspect of the present disclosure, there is provided a power-receiving device that receives AC power in a wireless manner using a magnetic field.

The power-receiving device includes a resonant circuit having a predetermined resonant frequency, the resonant circuit including a power-receiving coil that receives the AC power; a synchronous rectification circuit that rectifies the AC power into DC power, the synchronous rectification circuit including a plurality of leg circuits; a load device that consumes the DC power; and a control circuit for controlling the power-receiving device, wherein each of the plurality of leg circuits is composed of a rectifier diode, or a first switch and a second switch connected in series; each of the first switch and the second switch includes a parallel diode connected in parallel; the leg circuit is configured such that a cathode of the parallel diode of the second switch is connected to an anode of the rectifier diode or the parallel diode of the first switch; an output section of the resonant circuit is connected in the leg circuit between the rectifier diode, or the first switch and the second switch; in a half cycle of the AC power, the control circuit performs: a power supply mode in which DC power is output from the synchronous rectification circuit; and a short-circuit mode that controls a high-potential side second switch, which is one of the plurality of second switches in the plurality of leg circuits to which a voltage is applied in the reverse direction of the parallel diode, to be in an ON state; and in the short-circuit mode, a low-potential side second switch, which is one of the plurality of second switches through which current flows in the parallel diode, is controlled to be an ON state for a first period that is shorter than one cycle and longer than a half cycle of the AC power.

By adopting this configuration, the low-potential side second switch, through which current flows in the parallel diode, remains in the ON state, and current flows through the switch as AC power current reverses. In other words, the short-circuit mode is performed in response to the reversal of AC power current. Therefore, in the low-potential side second switch, switching losses are reduced by zero-voltage switching when it turns on. In addition, the short-circuit mode is performed when the rectifier diode or the parallel diode of the first switch is not energized. As a result, recovery current is less likely to occur in the rectifier diode or the parallel diode of the first switch when the short-circuit mode is performed. Therefore, it is possible to prevent large losses from occurring during switching when the power-receiving device of the present disclosure controls the power supplied to the load device by the short-circuit mode.

### [Brief Description of the Drawings]

The above features of the present disclosure will be made clearer by the following detailed description, given referring to the appended drawings. In the accompanying drawings:
Fig. 1 shows an explanatory diagram of a configuration of a wireless power supply system according to a first embodiment;
Fig. 2 shows a timing chart of a switch;
Fig. 3 shows an explanatory diagram of an operation of a synchronous rectification circuit in a mode A;
Fig. 4 shows an explanatory diagram of an operation of the synchronous rectification circuit in a mode B;
Fig. 5 shows an explanatory diagram of an operation of the synchronous rectification circuit in a mode C;
Fig. 6 shows an explanatory diagram of an operation of the synchronous rectification circuit in a mode D;
Fig. 7 shows an explanatory diagram of an operation of the synchronous rectification circuit in a mode DE;
Fig. 8 shows an explanatory diagram of an operation of the synchronous rectification circuit in a mode E;
Fig. 9 shows an explanatory diagram of an operation of the synchronous rectification circuit in a mode F;
Fig. 10 shows an explanatory diagram of an operation of the synchronous rectification circuit in a mode G;
Fig. 11 shows an explanatory diagram of an operation of the synchronous rectification circuit in a mode H;
Fig. 12 shows an explanatory diagram of an operation of the synchronous rectification circuit in a mode HA;
Fig. 13 shows an explanatory diagram of a configuration of a wireless power supply system according to a second embodiment;
Fig. 14 shows an explanatory diagram of a configuration of a wireless power supply system according to a third embodiment;
Fig. 15 shows an explanatory diagram of a configuration of the wireless power supply system according to a fourth embodiment;
Fig. 16 shows an explanatory diagram of a modified resonance method;
Fig. 17 shows an explanatory diagram of another modified resonance method;
Fig. 18 shows an explanatory diagram of yet another modified resonance method;
Fig. 19 shows an explanatory diagram of yet another modified resonance method;
Fig. 20 shows an explanatory diagram of a filter circuit configuration; and
Fig. 21 shows an explanatory diagram of another filter circuit configuration.

### [Description of the Embodiments]

### A. First Embodiment:

### A-1. Device Configuration:

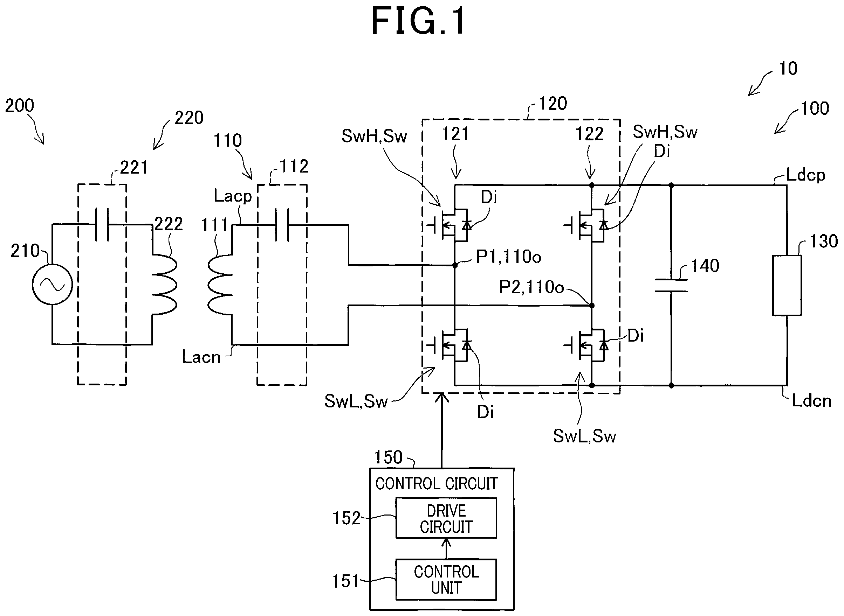

A wireless power supply system 10 shown in Fig. 1 supplies power to a load device 130 in a wireless manner using a magnetic field. As shown in Fig. 1, the wireless power supply system 10 includes a power-transmitting device 200 and a power-receiving device 100. The wireless power supply system 10 supplies power from the power-transmitting device 200 to the power-receiving device 100 in a wireless manner. The wireless power supply system 10 supplies power to a power-receiving device 100 mounted on a vehicle, for example, in a wireless manner.

The power-transmitting device 200 supplies AC power to the power-receiving device 100 in a wireless manner using a magnetic field. The power-transmitting device 200 includes an AC power supply device 210 and a power-transmitting resonant circuit 220.

The AC power supply device 210 supplies AC power at a predetermined operating frequency to the power-transmitting resonant circuit 220. The AC power supply device 210 includes a power supply circuit and a power transmission circuit. The power supply circuit is, for example, an AC/DC converter circuit, which converts AC power supplied from a grid power supply into DC power. The power transmission circuit is an inverter that converts DC power supplied from the power supply circuit into AC power at an operating frequency. The operating frequency is, for example, 85 kHz, and is set using a predetermined power transmission frequency as defined by the Radio Law, etc. Note that resonant frequencies of the power-transmitting resonant circuit 220 and the power-receiving resonant circuit 110, which will be explained later, are set according to the operating frequency of the AC power supply device 210.

The power-transmitting resonant circuit 220 magnetically couples with a power-receiving coil 111 of the power-receiving device 100 and undergoes resonance. The power-transmitting resonant circuit 220 includes a power-transmitting coil 222 and a power-transmitting resonant capacitor 221 connected in series with the power-transmitting coil 222. The power-transmitting resonant circuit is also referred to as a primary resonant circuit.

The power-transmitting resonant capacitor 221 causes the power-transmitting resonant circuit 220 to resonate with AC power of the AC power supply device 210 at its operating frequency when the power-transmitting coil 222 and the power-receiving coil 111 are magnetically coupled. In other words, a capacitance of the power-transmitting resonant capacitor 221 is set such that an operating frequency and a resonant frequency of the power-transmitting resonant circuit 220 substantially coincide when the power-transmitting coil 222 and the power-receiving coil 111 are magnetically coupled.

The power-transmitting coil 222 generates a magnetic field corresponding to the operating frequency of the AC power supply device 210. In addition, the power-transmitting coil 222 transmits AC power to the power-receiving coil 111 by magnetically coupling with it. In other words, the power-transmitting coil 222 transmits power in a wireless manner by utilizing the electromagnetic induction phenomenon.

The power-transmitting coil 222 is used, for example, by being laid on the ground. More specifically, the power-transmitting coil 222 is laid on the ground in a direction that allows it to face the power-receiving coil 111 mounted on the vehicle.

The power-receiving device 100 receives AC power from the power-transmitting device 200 in a wireless manner using a magnetic field. The power-receiving device 100 includes a power-receiving resonant circuit 110, a synchronous rectification circuit 120, the load device 130, a control circuit 150, and a smoothing capacitor 140. The power-receiving device 100 is, for example, mounted on the vehicle and receives power from the power-transmitting coil 222 laid on the ground.

The power-receiving resonant circuit 110 is magnetically coupled to the power-transmitting coil 222 and undergoes resonance. The power-receiving resonant circuit 110 includes the power-receiving coil 111 and a power-receiving resonant capacitor 112 connected in series with the power-receiving coil 111. The power-receiving resonant circuit is also referred to as a secondary resonant circuit or simply as a resonant circuit.

The power-receiving coil 111 is magnetically coupled to the power-transmitting coil 222 by receiving the magnetic field emitted by the power-transmitting coil 222. The power-receiving coil 111 is used in a position facing the power-transmitting coil 222, thereby receiving the magnetic field emitted by the power-transmitting coil 222. As a result, the power-receiving coil 111 magnetically couples with the power-transmitting coil 222, thereby receiving AC power at the operating frequency of the AC power supply device 210 in a wireless manner.

The power-receiving resonant capacitor 112 undergoes resonance with AC power of the AC power supply device 210 at its operating frequency when the power-receiving coil 111 and the power-transmitting coil 222 are magnetically coupled. In other words, a capacitance of the power-receiving resonant capacitor 112 is set such that the operating frequency of the AC power supply device 210 and the resonant frequency of the power-receiving resonant circuit 110 substantially coincide when the power-transmitting coil 222 and the power-receiving coil 111 are magnetically coupled. For this reason, the power-receiving resonant circuit 110 has a predetermined resonant frequency according to the operating frequency of the AC power supply device 210.

In the present embodiment, the power-receiving resonant capacitor 112 is located on a positive line Lacp of the power-receiving resonant circuit 110. The power-receiving resonant capacitor is also simply referred to as a resonant capacitor.

The synchronous rectification circuit 120 converts the received AC power into DC power. In the present embodiment, the synchronous rectification circuit 120 is a single-phase rectification circuit that uses four MOSFETs (Metal-Oxide-Semiconductor Field-Effect Transistors) as rectifier elements. The synchronous rectification circuit 120 includes two leg circuits: a first leg circuit 121 and a second leg circuit 122. Note that the synchronous rectification circuit is also simply referred to as a rectification circuit.

The leg circuit includes two switches Sw connected in series. In addition, the leg circuit connects a positive line Ldcp and a negative line Ldcn of DC power. One of the output terminals of the power-receiving resonant circuit 110 is connected between the two switches Sw of the leg circuit. Therefore, a space between the two switches Sw in the leg circuit is the position of the input terminal in the synchronous rectification circuit 120. In other words, the output section 110o of the power-receiving resonant circuit 110 is connected in the leg circuit between the first switch SwH and the second switch SwL. Note that, regarding the input terminals of the synchronous rectification circuit 120, the leg circuit having a terminal P1 is the first leg circuit 121. The leg circuit having a terminal P2 is the second leg circuit 122. The current generated by the AC power received via the terminals P1 and P2 is input to the synchronous rectification circuit 120.

Each of the two leg circuits is composed of a series connection of the first switch SwH, which acts as a rectifier element on the positive line Ldcp, and the second switch SwL, which acts as a rectifier element on the negative line Ldcn. In other words, the switches Sw constitute all of the rectifying elements in the synchronous rectification circuit 120.

The first switch SwH includes a parallel diode Di connected in parallel. The parallel diode Di is, for example, a body diode of a MOSFET. In other words, the drain of the first switch SwH is located on the positive line Ldcp side, and the source of the first switch SwH is located on the negative line Ldcn side. The cathode of the parallel diode Di is connected to the drain. The anode of the parallel diode Di is connected to the source. In addition, the gate of the first switch SwH is connected to the control circuit 150. The first switch SwH is driven by receiving a voltage at its gate in accordance with a command from the control circuit 150.

The second switch SwL includes a parallel diode Di connected in parallel. The second switch SwL and the parallel diode Di of the second switch SwL are configured in the same way as the first switch SwH and the parallel diode Di of the first switch SwH.

In other words, in the leg circuit, the cathode of the parallel diode of the second switch SwL is connected to the anode of the parallel diode Di of the first switch SwH.

It should be noted that in the present specification, the positive line side is also referred to as a high-side, and the negative line side is also referred to as a low-side. For this reason, the first switch is also referred to as a high-side switch, and the second switch is also referred to as a low-side switch.

The operation of the synchronous rectification circuit 120 during power conversion will be explained in detail later.

The smoothing capacitor 140 is connected in parallel to the output section of the synchronous rectification circuit 120 and the load device 130. The smoothing capacitor 140 smooths the DC current and DC voltage supplied to the load device 130.

The load device 130 consumes DC power. The load device 130 is, for example, a device that includes a battery and a battery protection circuit, etc. In other words, if the load device 130 includes a battery, the load device 130 charges DC power output from the synchronous rectification circuit 120. The power charged to the load device 130 is used, for example, in a vehicle equipped with the power-receiving device 100.

The control circuit 150 controls the power-receiving device 100. The control circuit 150 includes a control unit 151 and a drive circuit 152.

The drive circuit 152 drives the switches Sw. More specifically, the drive circuit 152 outputs the power necessary to drive the switches Sw in response to a command from the control unit 151. The drive circuit 152 is connected to the gate of each of the switches Sw of the synchronous rectification circuit 120. The drive circuit 152 drives the switches Sw by applying the gate voltage necessary for the ON and OFF operation of the switches Sw to the gates of the switches Sw. Note that in Fig. 1, the connections between the drive circuit 152 and the gates are omitted to facilitate understanding of the technology.

The control unit 151 generates signals to control the ON and OFF operation of the switches Sw. The control unit 151 is mainly composed of a microcomputer, and includes a CPU, ROM, RAM, etc. (not shown).

The control unit 151 performs two modes during a half cycle of the received AC power: a power supply mode M1 in which DC power is output from the synchronous rectification circuit 120, and a short-circuit mode M2 in which DC power is not output from the synchronous rectification circuit 120. The control method of the power-receiving device 100 by the control unit 151 will be described below.

### A-2. Control Method of power-receiving Device:

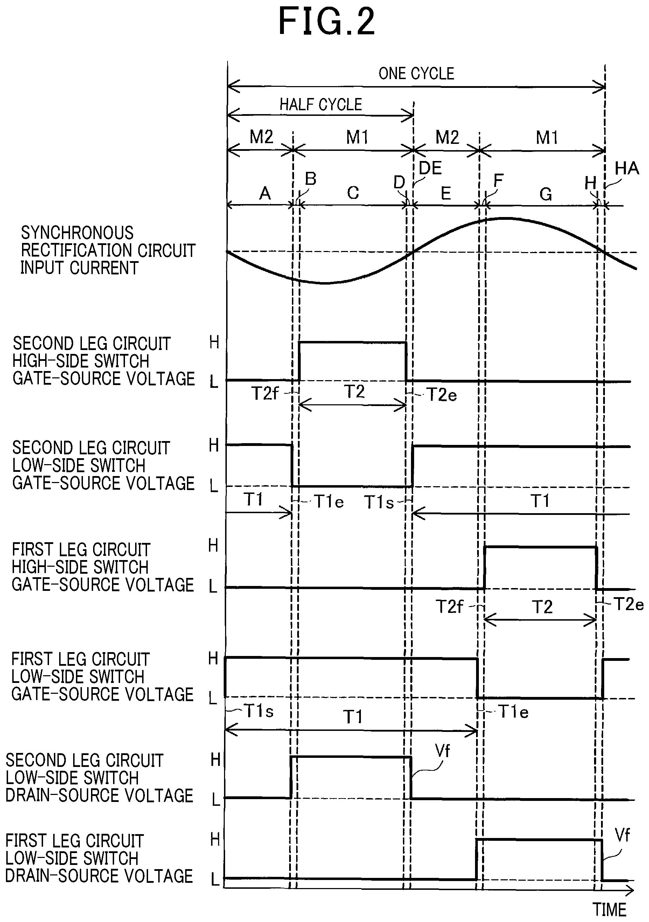

An upper part of Fig. 2 shows a sine wave of an input current of the synchronous rectification circuit 120.

In Fig. 2, the timing charts of gate-source voltages of the high-side switch SwH and low-side switch SwL of the second leg circuit 122, the high-side switch SwH and low-side switch SwL of the first leg circuit 121 are shown below the sine wave of the input current of the synchronous rectification circuit 120. The gate-source voltage timing chart shows that H represents the voltage value required to turn on the switch Sw, and L represents the voltage value required to turn off the switch Sw. Waveforms of the drain-source voltages of the low-side switch SwL of the second leg circuit 122 and the low-side switch SwL of the first leg circuit 121 are shown below the gate-source voltage timing chart. Note that although the waveform of the drain-source voltage is shown in the diagram to facilitate understanding of the technology, it is the waveform acquired by a first sensor 160 of a second embodiment.

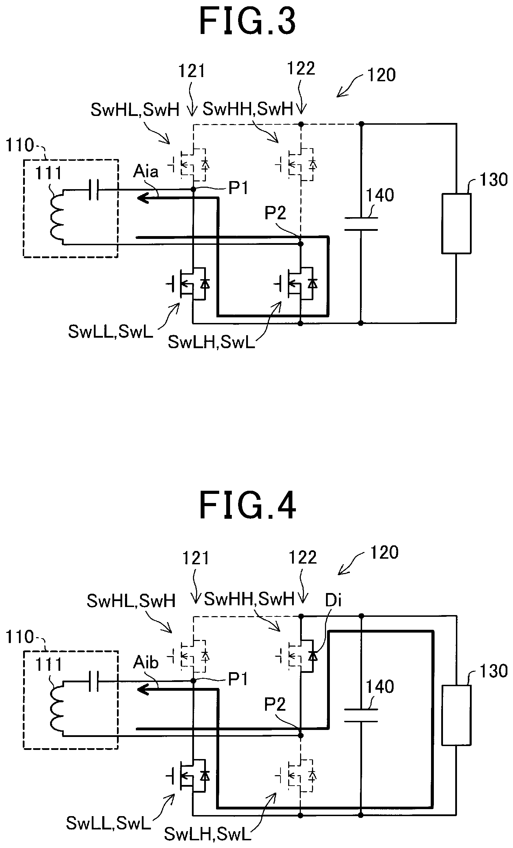

The control unit 151 controls the power-receiving device 100 to a plurality of modes using the switches Sw during one cycle of the input current of the synchronous rectification circuit 120. The plurality of modes of the power-receiving device 100 will be described in order, starting from the beginning of the negative half-cycle in the input current of the synchronous rectification circuit 120. It should be noted that in Figs. 3 to 12, which are used to explain the modes of the power-receiving device 100, some components like the power-transmitting device 200 and the control circuit 150 have been omitted from the drawing to facilitate understanding of the technology. Note that the duration of each mode of the plurality of modes of the power-receiving device 100 will be explained later.

In a mode A of Fig. 2, the control unit 151 controls the low-side switches SwL of the first leg circuit 121 and the second leg circuit 122 to be in the ON state. In addition, the control unit 151 controls the high-side switches SwH of the first leg circuit 121 and the second leg circuit 122 to the OFF state. As a result, the input current of the synchronous rectification circuit 120 during the mode A period returns to the power-receiving coil 111 via the two low-side switches SwL, as indicated by the arrow Aia in Fig. 3. In other words, since no DC power is output from the synchronous rectification circuit 120, power is not supplied to the load device 130.

In a mode B of Fig. 2, the control unit 151 controls the low-side switch SwL of the second leg circuit 122 to the OFF state. The control unit 151 maintains all switches Sw in the second leg circuit 122 except the low-side switch SwL in the same state as in the mode A. As a result, the input current of the synchronous rectification circuit 120 during the mode B period flows to the load device 130 via the parallel diode Di of the high-side switch SwH in the second leg circuit 122 and the low-side switch SwL of the first leg circuit 121, as indicated by the arrow Aib in Fig. 4. In other words, since DC power is output from the synchronous rectification circuit 120, power is supplied to the load device 130.

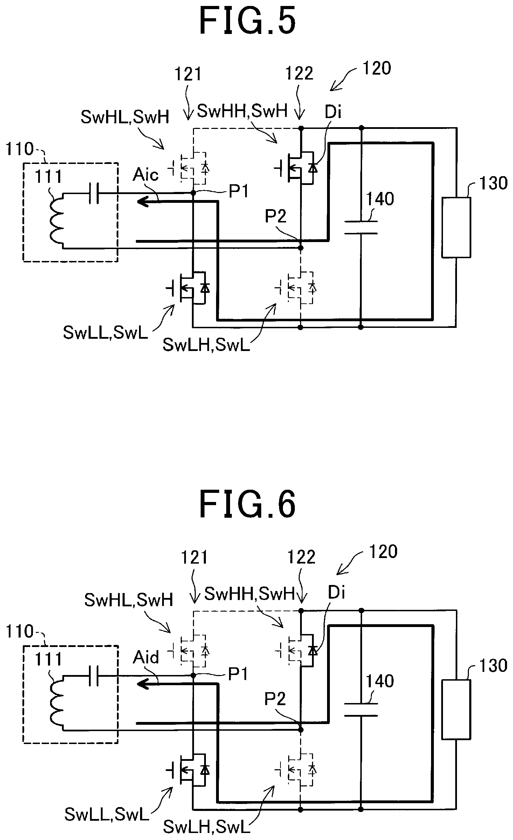

In a mode C of Fig. 2, the control unit 151 controls the high-side switch SwH of the second leg circuit 122 to the ON state. The control unit 151 maintains all switches Sw in the second leg circuit 122 except the high-side switch SwH in the same state as in the mode B. As a result, the input current of the synchronous rectification circuit 120 during the mode C period flows to the load device 130 via the high-side switch SwH in the second leg circuit 122 and the low-side switch SwL in the first leg circuit 121, as indicated by the arrow Aic in Fig. 5. In other words, since DC power is output from the synchronous rectification circuit 120, power is supplied to the load device 130.

In the mode B of Fig. 2, since it is a state that current is flowing through the parallel diode Di of the high-side switch SwH in the second leg circuit 122, the drain-source voltage is 0V. Therefore, when switching from the mode B to the mode C, that is, when the high-side switch SwH of the second leg circuit 122 is controlled to be the ON state, the high-side switch SwH of the second leg circuit 122 performs switching while the drain-source voltage is 0 V. As a result, switching losses are reduced. In other words, the high-side switch SwH of the second leg circuit 122 performs soft switching. This type of switching method is also commonly referred to as ZVS (Zero Voltage Switching).

In a mode D of Fig. 2, the control unit 151 controls the high-side switch SwH of the second leg circuit 122 to the OFF state. The control unit 151 maintains all switches Sw in the second leg circuit 122 except the high-side switch SwH in the same state as the mode C. As a result, the input current of the synchronous rectification circuit 120 during the mode D period flows to the load device 130 via the parallel diode Di of the high-side switch SwH in the second leg circuit 122 and the low-side switch SwL of the first leg circuit 121, as indicated by the arrow Aid in Fig. 6. In other words, since DC power is output from the synchronous rectification circuit 120, power is supplied to the load device 130.

In the mode D of Fig. 2, the current flowing through the high-side switch SwH in the second leg circuit 122 flows between the drain and the source via the parallel diode Di. In other words, the high-side switch SwH of the second leg circuit 122 is controlled to be in the OFF state when the drain-source voltage is 0V during the transition from the mode C to the mode D. Therefore, the high-side switch SwH of the second leg circuit 122 is switched to the OFF state by zero-voltage switching, thereby reducing switching losses.

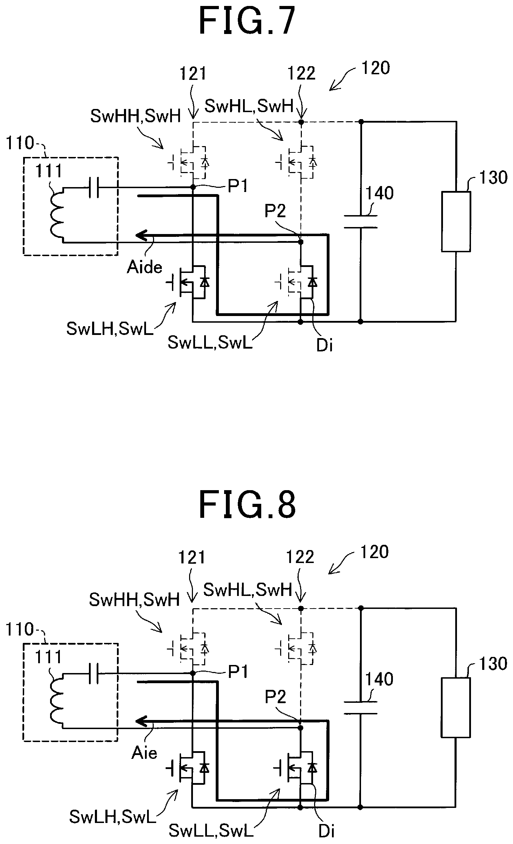

In Fig. 2, a mode DE is generated by a transition from the mode D when the input current of the synchronous rectification circuit 120 reverses from negative to positive. In the mode DE, the switch Sw of the synchronous rectification circuit 120 is in the same state as in the mode D. As a result, the input current of the positively inverted synchronous rectification circuit 120 begins to flow toward the power-receiving coil 111 via the low-side switch SwL of the first leg circuit 121 and the parallel diode Di of the low-side switch SwL in the second leg circuit 122, as indicated by the arrow Aide in Fig. 7. At this time, in the mode D, the current flowing through the parallel diode Di of the high-side switch SwH of the second leg circuit 122 gradually decreases sinusoidally to 0A. Therefore, the short-circuit mode M2 is performed in a state where the parallel diode Di of the high-side switch SwH of the second leg circuit 122 is not energized. In other words, losses due to recovery current are less likely to occur in the parallel diode Di of the high-side switch SwH of the second leg circuit 122.

In a mode E of Fig. 2, the control unit 151 controls the low-side switch SwL of the second leg circuit 122 to the ON state. The control unit 151 maintains all switches Sw in the second leg circuit 122 except the low-side switch SwL in the same state as the mode D. As a result, the input current of the synchronous rectification circuit 120 during the mode E period returns to the power-receiving coil 111 via the low-side switch SwL of the first leg circuit 121 and the low-side switch SwL of the second leg circuit 122, as indicated by the arrow Aie in Fig. 8. In other words, since no DC power is output from the synchronous rectification circuit 120, no power is supplied to the load device 130.

In the mode DE of Fig. 2, since it is a state that current flows through the parallel diode Di of the low-side switch SwL in the second leg circuit 122, the drain-source voltage is 0V. Therefore, when switching from the mode DE to the mode E, that is, when the low-side switch SwL of the second leg circuit 122 is controlled to be the ON state, the low-side switch SwL of the second leg circuit 122 performs switching while the drain-source voltage is 0 V. In other words, the switching loss is reduced when the low-side switch SwL of the second leg circuit 122 is switched to the ON state by zero-voltage switching.

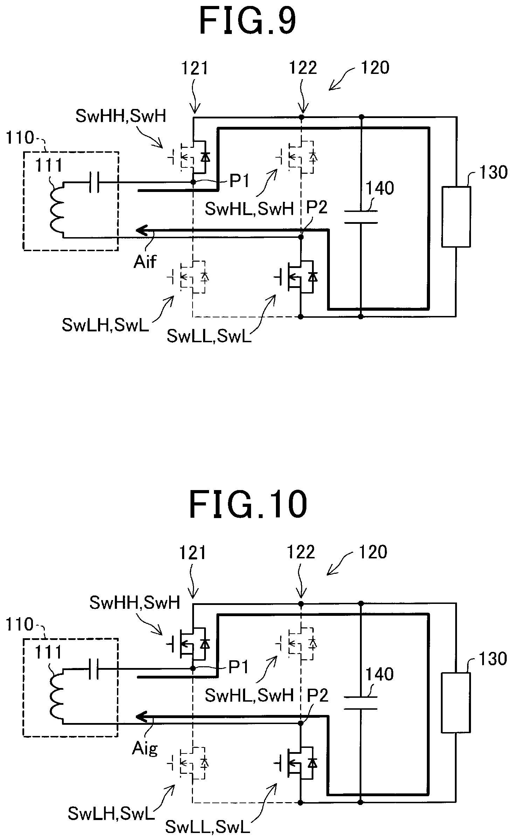

In a mode F of Fig. 2, the control unit 151 controls the low-side switch SwL of the first leg circuit 121 to the OFF state. The control unit 151 maintains all switches Sw in the first leg circuit 121 except the low-side switch SwL in the same state as the mode E. As a result, the input current of the synchronous rectification circuit 120 during the mode F period flows to the load device 130 via the parallel diode Di of the high-side switch SwH in the first leg circuit 121 and the low-side switch SwL of the second leg circuit 122, as indicated by the arrow Aif in Fig. 9. In other words, since DC power is output from the synchronous rectification circuit 120, power is supplied to the load device 130.

In a mode G of Fig. 2, the control unit 151 controls the high-side switch SwH of the first leg circuit 121 to the ON state. The control unit 151 maintains all switches Sw in the first leg circuit 121 except the high-side switch SwH in the same state as the mode F. As a result, the input current of the synchronous rectification circuit 120 during the mode G period flows to the load device 130 via the high-side switch SwH in the first leg circuit 121 and the low-side switch SwL in the second leg circuit 122, as indicated by the arrow Aig in Fig. 10. In other words, since DC power is output from the synchronous rectification circuit 120, power is supplied to the load device 130.

In the mode F of Fig. 2, since it is a state that current flows through the parallel diode Di of the high-side switch SwH in the first leg circuit 121, the drain-source voltage is 0V. Therefore, when switching from the mode F to the mode G, that is, when the high-side switch SwH of the second leg circuit 121 is controlled to the ON state, the high-side switch SwH of the second leg circuit 122 switches when the drain-source voltage is 0V. In other words, the high-side switch SwH of the second leg circuit 122 is switched to the ON state by zero-voltage switching, thereby reducing switching losses.

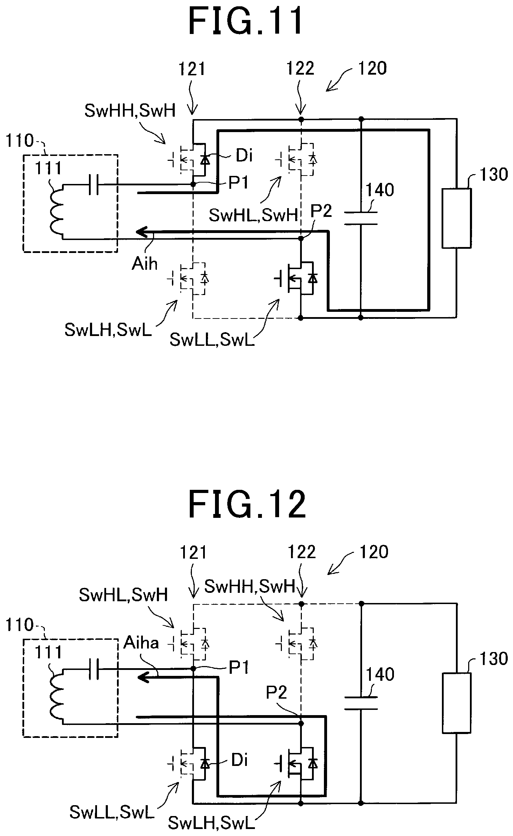

In the mode H of Fig. 2, the control unit 151 controls the high-side switch SwH of the second leg circuit 122 to the OFF state. The control unit 151 maintains all switches Sw in the second leg circuit 122 except the high-side switch SwH in the same state as the mode G. As a result, the input current of the synchronous rectification circuit 120 during the mode H period flows to the load device 130 via the high-side switch SwH of the first leg circuit 121 and the low-side switch SwL of the second leg circuit 122, as indicated by the arrow Aih in Fig. 11. In other words, since DC power is output from the synchronous rectification circuit 120, power is supplied to the load device 130.

In the mode H of Fig. 2, the current flowing through the high-side switch SwH in the first leg circuit 121 flows between the drain and source via the parallel diode Di. In other words, the high-side switch SwH of the first leg circuit 121 is controlled to be in the OFF state when the drain-source voltage is 0V during the transition from the mode G to the mode H. Therefore, the high-side switch SwH of the first leg circuit 121 is switched to the OFF state by zero-voltage switching, thereby reducing switching losses.

In Fig. 2, the mode HA is generated by a transition from the mode H due to the reversal of the input current of the synchronous rectification circuit 120 from positive to negative. In the mode HA, the switch Sw of the synchronous rectification circuit 120 is in the same state as in the mode H. As a result, the negatively inverted input current of the synchronous rectification circuit 120 begins to flow toward the power-receiving coil 111 via the parallel diode Di of the low-side switch SwL in the first leg circuit 121 and the low-side switch SwL in the second leg circuit 122, as indicated by the arrow Aiha in Fig. 12. At this time, in the mode H, the current flowing through the parallel diode Di of the high-side switch SwH of the first leg circuit 121 gradually decreases sinusoidally to 0A. Therefore, the short-circuit mode M2 is performed when the parallel diode Di of the high-side switch SwH of the first leg circuit 121 is not energized. In other words, losses due to recovery current are less likely to occur in the parallel diode Di of the high-side switch SwH of the first leg circuit 121.

In the mode HA of Fig. 2, since current flows through the parallel diode Di of the low-side switch SwL in the first leg circuit 121, the drain-source voltage is 0V. Therefore, when switching from the mode HA to the mode A, that is, when the low-side switch SwL of the first leg circuit 121 is controlled to be in an ON state, the low-side switch SwL of the first leg circuit 121 performs switching while the drain-source voltage is 0 V. In other words, the low-side switch SwL of the first leg circuit 121 is switched to the ON state by zero-voltage switching, thereby reducing switching losses.

Based on the above, as shown in the upper part of Fig. 2, the short-circuit mode M2 corresponds to the modes A, DE, E, and HA. The other modes correspond to the power supply mode M1. In the short-circuit mode M2, as shown in Figs. 3 and 8, the control unit 151 controls the high-potential side low-side switch SwLH, which is one of the plurality of low-side switches SwL in the plurality of leg circuits, to the ON state, and is the low-side switch SwL to which a voltage is applied in the reverse direction of the parallel diode Di of the low-side switch SwL. Note that the high-potential side refers to the leg circuit that has the input terminal of the synchronous rectification circuit 120, which has a higher potential, among the two leg circuits. The high-potential low-side switch SwLH is the low-side switch SwL in the leg circuit of the synchronous rectification circuit 120, which has the higher potential input terminal among the two input terminals P1 and P2. The high-potential low-side switch is also referred to as a low-potential side second switch.

The control unit 151 adjusts the power supplied to the load device 130 by changing the ratio of the short-circuit mode M2 and the power supply mode M1 in one cycle. More specifically, the control unit 151 adjusts the power supplied to the load device 130 by changing the ratio of the mode A and the mode C in a half-cycle, and the ratio of the mode E and the mode G in a half-cycle. Therefore, the duration of the short-circuit mode M2 is determined based on the power supplied to the load device 130. For example, the power supplied to the load device 130 is predetermined before the power-receiving device 100 is started, based on the rated power of the load device 130.

Note that the durations for the modes B, D, F, and H are predetermined before the power-receiving device 100 is started, as the dead time for the high-side switch SwH and the low-side switch SwL in the same leg circuit.

In addition, as shown in Figs. 7 and 12, the control unit 151 controls the low-potential side low-side switch SwLL, which is one of the pluralities of low-side switches SwL in the short-circuit mode M2 and in which current flows through the parallel diode Di, to the ON state for a first period T1 that is shorter than one cycle and longer than a half cycle of the received AC power. Note that the low-potential side refers to the leg circuit that has the input terminal of the synchronous rectification circuit 120 with the lower potential among the two leg circuits. The low-potential side low-side switch SwLL is the low-side switch in the leg circuit of the synchronous rectification circuit 120, which has the lower potential input terminal among the two input terminals P1 and P2. The low-potential side low-side switch is also referred to as a low-potential side second switch. In other words, the control unit 151 controls the low-potential side low-side switch SwLL to remain the ON state for longer than a half cycle in the short-circuit mode M2, thereby maintaining the ON state until the next short-circuit mode M2. As a result, the low-potential side switch SwLL, which is controlled to be the ON state in the short-circuit mode M2, remains the ON state until the current reverses. Therefore, the low-potential side low-side switch SwLL functions as the high-potential side low-side switch SwLH in response to the reversal of the current, initiating the short-circuit mode M2 through zero-voltage switching.

In other words, the first period T1 shown in Fig. 2 begins at the point T1s when the low-potential side switch SwLL, which is in the OFF state, is controlled to the ON state. The length of the first period T1 is less than one cycle of the operating frequency of the AC power supply device 210 and longer than a half cycle, and is predetermined before the power-receiving device 100 is started, based on the power supplied to the load device 130 as described above.

In power supply mode M1, as shown in Figs. 3, 4, 8, and 9, when the control unit 151 controls the high-potential side low-side switch SwLH, which is the ON state among the plurality of low-side switches SwL in the short-circuit mode M2, to be the OFF state, it controls the high-side switch SwH in the leg circuit equipped with the ON state high-potential side low-side switch SwLH to be the OFF state. Further, the control unit 151 controls the high-potential side low-side switch SwLH, which is in the ON state, to the OFF state, and then controls the high-side switch SwH, which is in the OFF state, to the ON state for the second period T2, as shown in Figs. 5 and 10. In other words, the control unit 151 turns off the high-side switch SwH and rectifies the current via the parallel diode Di when transitioning from the short-circuit mode M2 to the power supply mode M1. Therefore, in the synchronous rectification circuit 120, when the high-side switch SwH is controlled to the ON state, switching losses are reduced by zero-voltage switching.

Note that the second period T2 shown in Fig. 2 ends at a point in time T2e that is longer than the first period T1 but shorter than one cycle of the operating frequency of the AC power supply device 210, starting from the beginning T1s of the first period T1. The length of the second period T2 is predetermined before the power-receiving device 100 is started, based on the first period T1 and the dead time of the mode from the end of the first period T1e to the start of the second period T2s.

By adopting this configuration, the low-potential side second switch SwLL, through which current flows in the parallel diode Di, remains in the ON state, and current flows through the switch Sw as AC power current reverses. In other words, the short-circuit mode M2 is performed in response to the reversal of AC power current. Therefore, in the low-potential side second switch SwLL, switching losses are reduced by zero-voltage switching when it turns on. In addition, the short-circuit mode M2 is performed when the parallel diode Di of the first switch SwH is not energized. As a result, recovery current is less likely to occur in the parallel diode Di of the first switch SwH when the short-circuit mode M2 is performed. Therefore, it is possible to prevent large losses from occurring during switching when the power-receiving device 100 of the present disclosure controls the power supplied to the load device 130 by the short-circuit mode M2.

Further, by adopting this configuration, current flows through the first switch SwH when the high-potential low-side switch SwLH is turned off. Since the first switch SwH is in the OFF state, the current flows through the parallel diode Di. As a result, when the first switch SwH turns on, switching losses are reduced by zero-voltage switching. Therefore, the power-receiving device 100 of the present disclosure can reduce switching losses in the power supply mode M1 compared to a configuration in which the first switch SwH is turned on by hard switching.

In addition, by adopting this configuration, the short-circuit mode M2 is performed at a period corresponding to the resonant frequency without detecting the period of AC power. Therefore, the power-receiving device 100 of the present disclosure can reduce the cost required for the power-receiving device 100 compared to a configuration that includes a sensor for detecting the period of AC power. Further, by adopting this configuration, the first switch SwH is controlled to be in the OFF state after the second period when a forward voltage is applied to the first parallel diode. As a result, when the first switch SwH is controlled to the OFF state, switching losses can be reduced by zero-voltage switching.

### B. Second Embodiment:

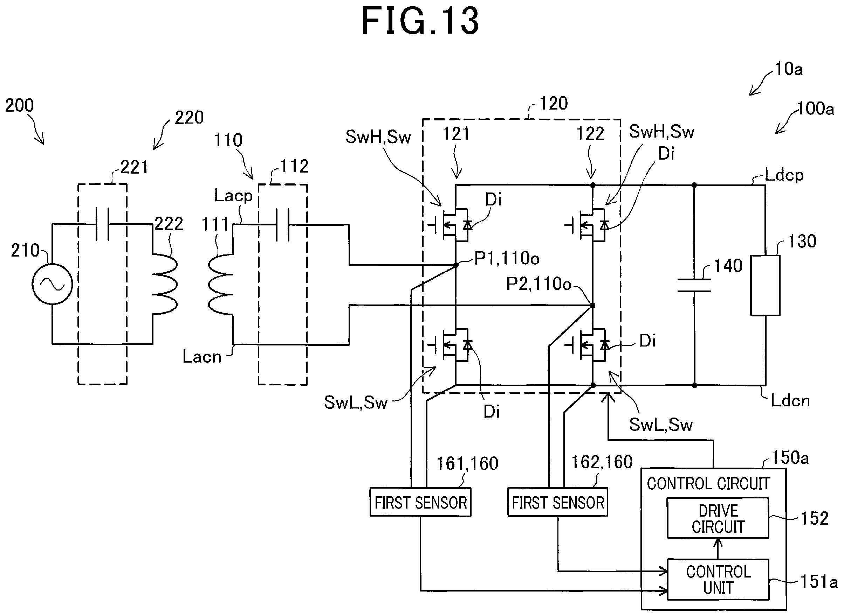

As shown in Fig. 13, a power-receiving device 100a of the second embodiment includes a first sensor 160 in addition to the configuration of the first embodiment.

The first sensor 160 detects a voltage of a rectifier element of the synchronous rectification circuit 120. In other words, the first sensor 160 is a voltage sensor. The first sensor 160 is connected to both the drain and source terminals of the low-side switch SwL. The first sensor 160 detects a voltage fall rate Vf across both ends of the low-side switch SwL for the voltages of the two leg circuits. The voltage fall rate Vf is shown in Fig. 2. The first sensor 160 transmits the acquired information to the control unit 151a.

The other components of a wireless power supply system 10a in the second embodiment are the same as those of the wireless power supply system 10 in the first embodiment. It should be noted that, for the configuration of the wireless power supply system 10a of the second embodiment, the letter "a" is added to the end of the reference numeral to indicate a configuration that differs from the configuration of the wireless power supply system 10 of the first embodiment.

In the second embodiment, a control unit 151a performs a short-circuit mode M2 based on the detection of a voltage fall rate Vf by the first sensor 160. For example, as shown in the lower part of Fig. 2, the control unit 151a of the second embodiment detects the voltage fall rate Vf at the low-side switch SwL of the second leg circuit 122. The control unit 151a of the second embodiment confirms that the short-circuit mode M2 is being performed correctly, and then controls the low-side switch SwL of the second leg circuit 122 to the ON state during the first period T1. The control unit 151a of the second embodiment also controls the low-side switch SwL of the first leg circuit 121 in the same manner.

By adopting this configuration, the power-receiving device 100a of the second embodiment can control the synchronous rectification circuit 140 more stable than the configuration without the first sensor 160. In addition, voltage sensors are generally less expensive than current sensors. Therefore, the power-receiving device 100a of the present disclosure can reduce the cost of the device compared to configuring the first sensor 160 with a current sensor.

Further, by adopting this configuration, the high-side switch SwH is switched on and off at intervals shorter than one cycle. For example, if the high-side switch SwH is simply driven by the inverted signal of the low-side switch SwL, and the voltage rise and fall waveforms are not detected properly, the high-side switch SwH will remain in the ON state. As a result, the next voltage rise and fall may not occur, and short-circuit mode or power supply mode may not be performed. However, in the power-receiving device 100a of the present disclosure, such concerns do not arise because the high-side switch SwH is turned off in a period shorter than one cycle, and the device can operate stably.

### C. Third Embodiment:

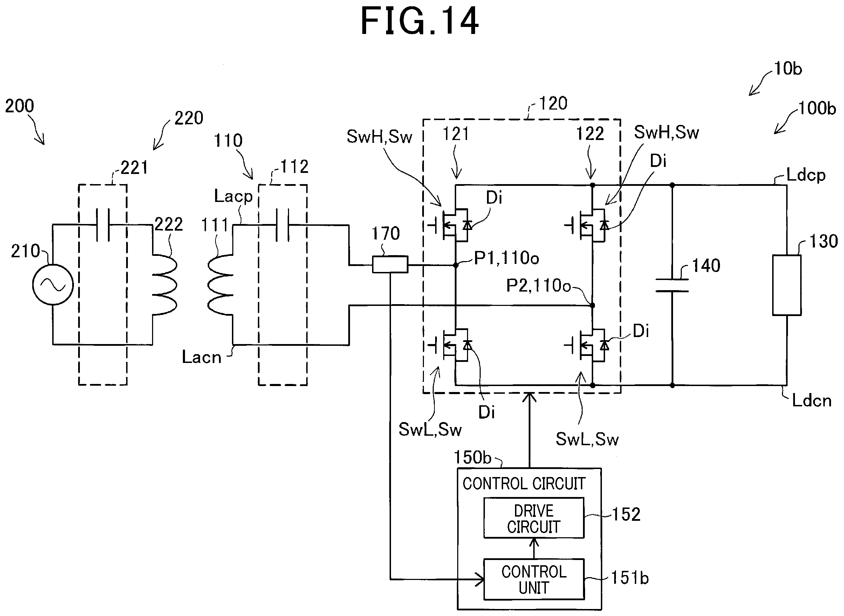

As shown in Fig. 14, a power-receiving device 100b of the third embodiment includes a second sensor 170 for acquiring an actual cycle of AC power current, in addition to the configuration of the first embodiment. The second sensor 170 is disposed in the power-receiving resonant circuit 110, and acquires the actual cycle of the current flowing through the power-receiving resonant circuit 110 and transmits it to a control unit 151b. The cycle acquired by the second sensor 170 is referred to as an actual cycle. In the first embodiment, the first period T1 and the second period T2 are predetermined based on one cycle of the operating frequency of the AC power supply device 210. However, in the third embodiment, the first period T1 and the second period T2 are determined based on the actual cycle.

The other components of a wireless power supply system 10b of the third embodiment are the same as those of the wireless power supply system 10 of the first embodiment. It should be noted that, for the configuration of the wireless power supply system 10b of the third embodiment, the letter "b" is added to the end of the reference numeral to indicate a configuration that differs from the configuration of the wireless power supply system 10 of the first embodiment.

By adopting this configuration, the short-circuit mode M2 and the power supply mode M1 are performed based on the actual cycle. By controlling based on the actual AC power cycle, the power-receiving device 100 of the present disclosure can stably perform the short-circuit mode M2 and the power supply mode M1 compared to a configuration that performs control without detecting AC power cycle.

### D. Fourth Embodiment:

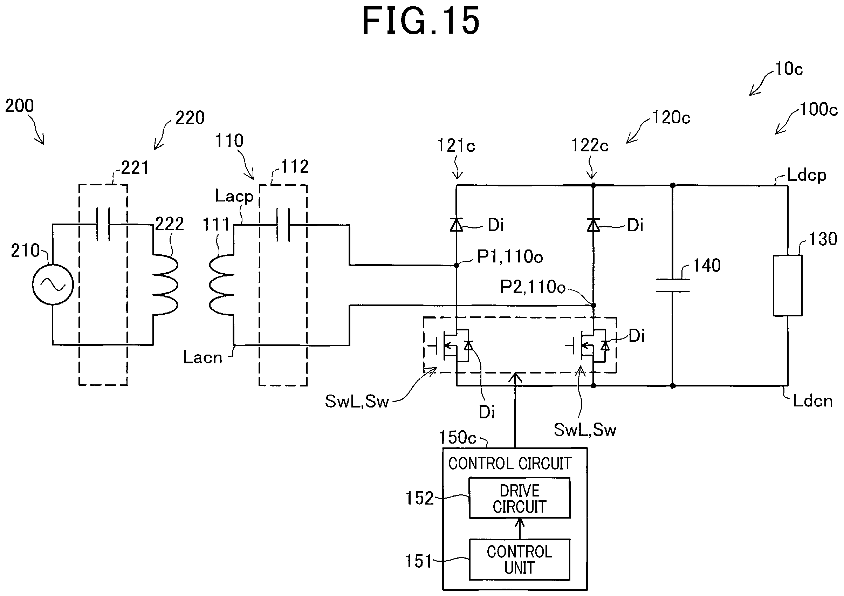

In the above embodiments, the synchronous rectification circuit 120 is configured with all rectifier elements being switches Sw. However, as shown in a synchronous rectification circuit 120c of the fourth embodiment in Fig. 15, only the low-side rectifier element may be configured by the switch Sw. In other words, the synchronous rectification circuit 120c of the fourth embodiment is configured with a rectifier diode Di as a high-side rectifier element. In the fourth embodiment, since the synchronous rectification circuit 120c can perform the short-circuit mode M2 by the low-side switch SwL, if only the low-side rectifier element is configured by the switch Sw, the short-circuit mode M2 can be performed. In other words, a control circuit 150c of the fourth embodiment controls only the low-side switch SwL.

The other components of the wireless power supply system 10c of the fourth embodiment are the same as those of the wireless power supply system 10 of the first embodiment. It should be noted that, for the configuration of the wireless power supply system 10c of the fourth embodiment, the notation "c" is added to the end of the reference numeral to indicate a configuration that differs from the configuration of the wireless power supply system 10 of the first embodiment.

Therefore, even in this configuration, the power-receiving device 100c of the present disclosure can prevent large losses from occurring during switching when controlling the power supplied to the load device 130 by the short-circuit mode M2. In addition, with the rectifier diode Di, recovery current is less likely to occur when the short-circuit mode M2 is performed. Further, since the power required to control the switch Sw is reduced, the rated power of the control circuit 150 can be reduced. In other words, the power-receiving device 100c of the present disclosure can be made smaller compared to a configuration in which all rectifier elements are configured of switches Sw.

### E. Modification 1:

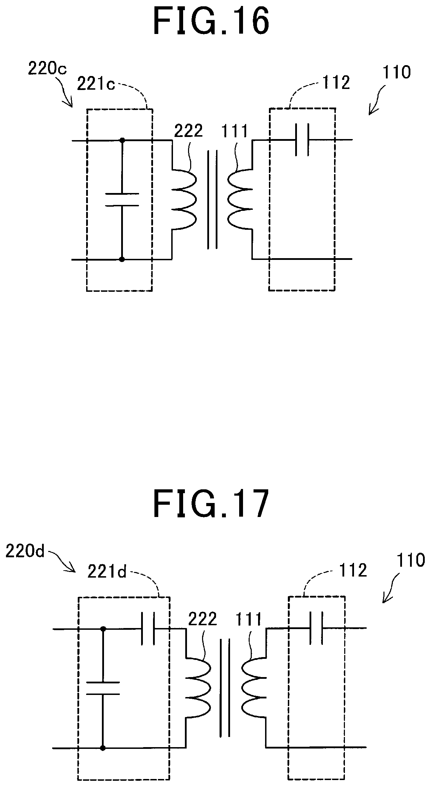

In the above embodiments, as shown in Fig. 1, an example is shown in which a resonance method is applied using the power-transmitting resonant circuit 220, which is a series resonant circuit, and the power-receiving resonant circuit 110, which is a series resonant circuit. In contrast, the following resonance methods can also be applied. However, in order to facilitate understanding of the technology, only the configurations corresponding to the power-transmitting resonant circuit 220 and the power-receiving resonant circuit 110 in the first embodiment are shown in Figs. 16 to 19.

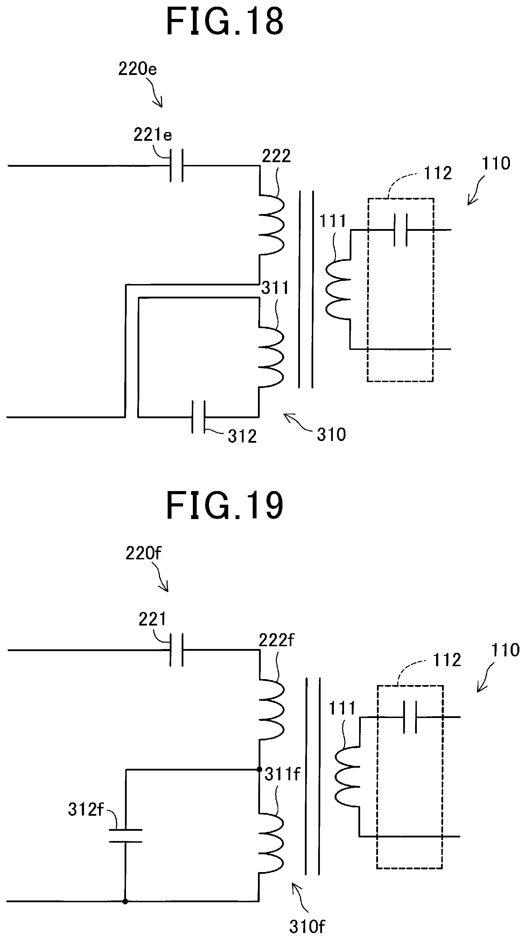

As shown in Fig. 16, a power-transmitting resonant circuit 220c may be a parallel resonant circuit in which a power-transmitting resonant capacitor 221c is connected in parallel with the power-transmitting coil 222, and the power-receiving resonant circuit 110 may be a series resonant circuit, the same as in the first embodiment. In addition, as shown in Fig. 17, a power-transmitting resonant circuit 220d may also be a circuit in which a power-transmitting resonant capacitor 221d is connected in series with the power-transmitting coil 222, and another power-transmitting resonant capacitor 221 is connected in parallel with the power-transmitting coil 222 and the power-transmitting resonant capacitor 221 connected in series. In this case, the power-receiving resonant circuit 110 is the same series resonant circuit as in the first embodiment. Further, as shown in Fig. 18, a power-transmitting device 200e may also be provided with a tertiary resonant circuit 310, which is a circuit independent of a power-transmitting resonant circuit 220e, and in which a tertiary coil 311 and a tertiary power-receiving resonant capacitor 312 are connected in series. Note that the tertiary resonant circuit 310 is arranged such that the tertiary coil 311 is magnetically coupled to the power-transmitting coil 222 and the power-receiving coil 111, respectively. Furthermore, as shown in Fig. 19, a power-transmitting device 220f may also be provided with a tertiary resonant circuit 310f, in which a tertiary coil 311f and a tertiary power-receiving resonant capacitor 312f are connected in parallel, connected in series with a power-transmitting coil 222f. The tertiary resonant circuit 310f is arranged such that the tertiary coil 311f is magnetically coupled to the power-transmitting coil 222f and the power-receiving coil 111, respectively. Note that in the configuration in which the tertiary resonant circuit 310f is disposed, the power-receiving resonant circuit 110 is the same series resonant circuit as in the first embodiment.

### F. Modification 2:

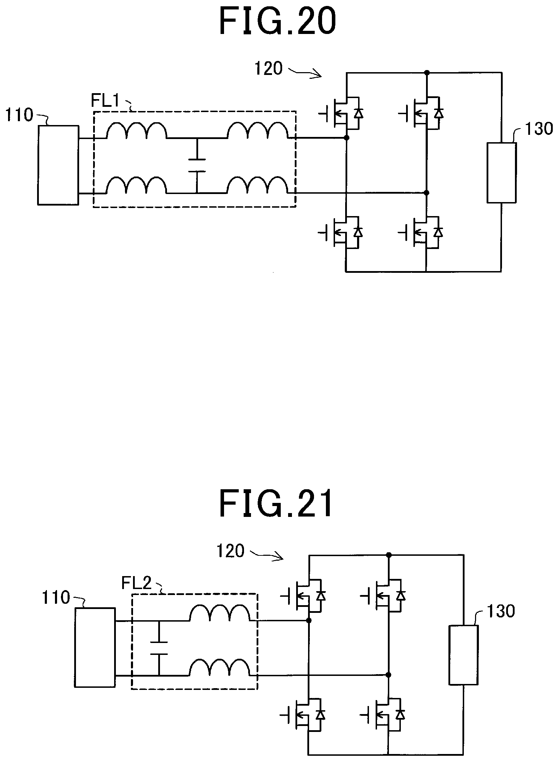

In the above embodiments, the power-receiving device 100 may include a filter circuit between the power-receiving resonant circuit 110 and the synchronous rectification circuit 120. More specifically, the power-receiving device 100 may be equipped with an immittance filter, as shown in a filter circuit FL1 in Fig. 20 and a filter circuit FL2 in Fig. 21. The power-receiving device 100 may also include a bandpass filter in addition to the immittance filter. Note that some parts, such as the smoothing capacitor 140 and the power-receiving resonant circuit 110, are omitted from the drawings in Figs. 20 and 21.

### G. Modification 3:

(1) In the above embodiments, the first sensor 160 is a voltage sensor. However, the first sensor 160 may also be a current sensor that detects the output current of the synchronous rectification circuit 120. The current sensor is connected in series with the synchronous rectification circuit 120 and the load device 130. The current sensor transmits information about the output current of the synchronous rectification circuit 120 to the control unit 151. The control unit 151 adjusts the duration of the short-circuit mode M2 using the first sensor 160 based on the power supplied to the load device 130 which is predetermined, for example.
(2) In the above embodiments, the first sensor 160 detects the voltage fall rate Vf. The control unit 151 performs the short-circuit mode M2 based on the detection of the voltage fall rate Vf by the first sensor 160. However, the first sensor 160 may be disposed between the drain and source of the high-side switch SwH to detect a voltage rise rate across both ends of the high-side switch SwH. In other words, the control unit 151 may perform the short-circuit mode M2 based on the detection of the voltage rise rate by the first sensor 160.
(3) In the first embodiment, the power-receiving resonant capacitor 111RC includes only the positive side power-receiving resonant capacitor 111RCp which is located on the positive side line Lacp of the power-receiving resonant circuit 110. However, the power-receiving resonant capacitor 111RC may also include a negative power-receiving resonant capacitor located on the negative line Lacn of the power-receiving resonant circuit 110. This suppresses common-mode noise from being generated.
(4) In the above embodiments, the switch Sw of the synchronous rectification circuit 120 is a MOSFET. However, the switch Sw in the synchronous rectification circuit 120 may be replaced with other switching elements. The switch Sw may be, for example, a BJT (Bipolar Junction Transistor) or an IGBT (Insulated Gate Bipolar Transistor).
(5) In the above embodiments, the synchronous rectification circuit 120 is composed of two leg circuits. However, the synchronous rectification circuit 120 may be composed of two or more leg circuits. For example, the synchronous rectification circuit 120 may be composed of three leg circuits and be a circuit that rectifies three-phase AC power.
(6) In the above embodiments, the power supplied to the load device 130 is predetermined before the power-receiving device 100 is started, based on the rated power of the load device 130. However, the power supplied to the load device 130 may be changed, for example, according to the current value obtained by having a current sensor in the power-receiving device 100 that obtains the current flowing through the load device 130. More specifically, the control unit 151 determines the power supplied to the load device 130 based on the acquired current value and adjusts the first period T1 according to the rated power of the load device 130. As a result, the power-receiving device 100 can efficiently supply power to the load device 130 even when AC power received fluctuates.

The present disclosure is not limited to the above-described embodiments and modifications, and can be realized in various configurations without departing from the scope of the present disclosure. For example, the technical features in the embodiments and modifications corresponding to the technical features in each form described in the Summary of the Invention section can be replaced or combined as appropriate in order to solve some or all of the above problems or to achieve some or all of the above effects. In addition, if such technical features are not described as essential to the present specification, they may be deleted as appropriate.

### (Aspect 1)

A power-receiving device (100, 100a, 100b, 100c) that receives AC power in a wireless manner using a magnetic field, the power-receiving device including:
a resonant circuit (110) having a predetermined resonant frequency, the resonant circuit including a power-receiving coil (111) that receives the AC power;
a synchronous rectification circuit (120) that rectifies the AC power into DC power, the synchronous rectification circuit being composed of a plurality of leg circuits (121, 121c, 122, 122c);
a load device (130) that consumes the DC power; and
a control circuit (150, 150a, 150b, 150c) for controlling the power-receiving device, wherein
each of the plurality of leg circuits is composed of a rectifier diode (Di), or a first switch (SwH) and a second switch (SwL) connected in series;
each of the first switch and the second switch includes a parallel diode (Di) connected in parallel;
the leg circuit is configured such that a cathode of the parallel diode of the second switch is connected to an anode of the rectifier diode or the parallel diode of the first switch;
an output section (110o) of the resonant circuit is connected in the leg circuit between the rectifier diode, or the first switch and the second switch;
in a half cycle of the AC power, the control circuit performs:
   a power supply mode (M1) in which DC power is output from the synchronous rectification circuit; and
   a short-circuit mode (M2) that controls a high-potential side second switch (SwLH), which is one of the plurality of second switches in the plurality of leg circuits to which a voltage is applied in the reverse direction of the parallel diode, to be in an ON state; and
in the short-circuit mode, a low-potential side second switch (SwLL), which is one of the plurality of second switches through which current flows in the parallel diode, is controlled to be an ON state for a first period that is shorter than one cycle and longer than a half cycle of the AC power.

### (Aspect 2)

The power-receiving device according to aspect 1, wherein
the leg circuit is configured by connecting the first switch and the second switch in series;
when controlling the high-potential side second switch among the plurality of second switches from the ON state to the OFF state, the power supply mode controls the first switch in the leg circuit including the high-potential side second switch in the ON state such that the first switch is in the OFF state, and
the power supply mode controls the first switch, which is in the OFF state, to the ON state for a second period of time after controlling the high-potential side second switch, which is in the ON state, to the OFF state.

### (Aspect 3)

The power-receiving device according to aspect 2, the power-receiving device further includes:
a first sensor (160) for detecting the voltage of the synchronous rectification circuit; wherein
the first sensor detects a voltage rise rate across both ends of the first switch or a voltage fall rate across both ends of the second switch for the voltages of the plurality of leg circuits; and
the control circuit performs the short-circuit mode based on the detection of the voltage rise or the voltage fall by the first sensor.

### (Aspect 4)

The power-receiving device according to aspect 2, the power-receiving device further includes:
a second sensor (170) for acquiring an actual cycle of the current or voltage of the AC power, wherein
the control circuit controls a start of the first period, which is a point at which the OFF state of the low-potential side second switch is turned on, to set an end of the second period to a point at which a time longer than the first period but shorter than one cycle of the actual cycle has elapsed.

### (Aspect 5)

The power-receiving device according to aspect 3, wherein
the control circuit controls a start of the first period, which is a point at which the OFF state of the low-potential side second switch is turned on, to set an end of the second period to a point at which a time longer than the first period but shorter than one cycle has elapsed.

## Claims

1. A power-receiving device (100, 100a, 100b, 100c) that receives AC power in a wireless manner using a magnetic field, the power-receiving device comprising:
a resonant circuit (110) having a predetermined resonant frequency, the resonant circuit including a power-receiving coil (111) that receives the AC power;
a synchronous rectification circuit (120) that rectifies the AC power into DC power, the synchronous rectification circuit being composed of a plurality of leg circuits (121, 121c, 122, 122c);
a load device (130) that consumes the DC power; and
a control circuit (150, 150a, 150b, 150c) for controlling the power-receiving device, wherein
each of the plurality of leg circuits is composed of a rectifier diode (Di), or a first switch (SwH) and a second switch (SwL) connected in series;
each of the first switch and the second switch includes a parallel diode (Di) connected in parallel;
the leg circuit is configured such that a cathode of the parallel diode of the second switch is connected to an anode of the rectifier diode or the parallel diode of the first switch;
an output section (110o) of the resonant circuit is connected in the leg circuit between the rectifier diode, or the first switch and the second switch;
in a half cycle of the AC power, the control circuit performs:
a power supply mode (M1) in which DC power is output from the synchronous rectification circuit; and
a short-circuit mode (M2) that controls a high-potential side second switch (SwLH), which is one of the plurality of second switches in the plurality of leg circuits to which a voltage is applied in the reverse direction of the parallel diode, to be in an ON state; and
in the short-circuit mode, a low-potential side second switch (SwLL), which is one of the plurality of second switches through which current flows in the parallel diode, is controlled to be an ON state for a first period that is shorter than one cycle and longer than a half cycle of the AC power.

2. The power-receiving device according to claim 1, wherein
the leg circuit is configured by connecting the first switch and the second switch in series;
when controlling the high-potential side second switch among the plurality of second switches from the ON state to the OFF state, the power supply mode controls the first switch in the leg circuit including the high-potential side second switch in the ON state such that the first switch is in the OFF state, and
the power supply mode controls the first switch, which is in the OFF state, to the ON state for a second period of time after controlling the high-potential side second switch, which is in the ON state, to the OFF state.

3. The power-receiving device according to claim 2, the power-receiving device further includes:
a first sensor (160) for detecting the voltage of the synchronous rectification circuit; wherein
the first sensor detects a voltage rise rate across both ends of the first switch or a voltage fall rate across both ends of the second switch for the voltages of the plurality of leg circuits; and
the control circuit performs the short-circuit mode based on the detection of the voltage rise or the voltage fall by the first sensor.

4. The power-receiving device according to claim 2, the power-receiving device further includes:
a second sensor (170) for acquiring an actual cycle of the current or voltage of the AC power, wherein
the control circuit controls a start of the first period, which is a point at which the OFF state of the low-potential side second switch is turned on, to set an end of the second period to a point at which a time longer than the first period but shorter than one cycle of the actual cycle has elapsed.

5. The power-receiving device according to claim 3, wherein
the control circuit controls a start of the first period, which is a point at which the OFF state of the low-potential side second switch is turned on, to set an end of the second period to a point at which a time longer than the first period but shorter than one cycle has elapsed.
